(19) **Europäisches Patentamt**
**European Patent Office**
**Office européen des brevets**

(11) **EP 3 995 470 A1**

(12) **EUROPEAN PATENT APPLICATION**

(43) Date of publication:
**11.05.2022 Bulletin 2022/19**

(21) Application number: **20206746.8**

(22) Date of filing: **10.11.2020**

(51) International Patent Classification (IPC):
**C04B 28/04** $^{(2006.01)}$

(52) Cooperative Patent Classification (CPC):
(C-Sets available)
**C04B 28/04;** C04B 2111/00017; C04B 2111/1018
(Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **HeidelbergCement AG**
**69120 Heidelberg (DE)**

(72) Inventors:
- **Bolte, Gerd**
 **69190 Walldorf (DE)**

- **Zajac, Maciej**
 **69126 Heidelberg (DE)**
- **Skocek, Jan**
 **69151 Neckargemünd (DE)**
- **Ben Haha, Mohsen**
 **69117 Heidelberg (DE)**

(74) Representative: **Zellentin & Partner mbB Patentanwälte**
**Rubensstraße 30**
**67061 Ludwigshafen (DE)**

(54) **CONCRETE ELEMENTS AND METHOD FOR MANUFACTURING THEM**

(57) Concrete element obtainable from a sulfate free portland cement clinker containing cement by mixing the cement with water to form a wet mixture, hydration of the wet mixture until at least 5 wt.-% of calcium aluminate, calcium ferrite and calcium aluminate ferrite phases contained in the cement are hydrated to provide a green element and carbonation hardening of the green element to provide the concrete element, as well as by a method for manufacturing concrete elements comprising: manufacturing a portland cement clinker containing cement without added sulfate carrier, mixing the cement with water forming a wet mixture, hydration of the wet mixture until at least 5 wt.-% of calcium aluminate, calcium ferrite and calcium aluminate ferrite phases contained in the cement are hydrated to provide a green element and carbonation hardening of the green element to provide the concrete element, and a use of sulfate free cement for sequestering carbon dioxide wherein the cement is mixed with a retarder and water to form a wet mixture, the wet mixture is hydrated until at least 5 wt.-% of calcium aluminate, calcium ferrite and calcium aluminate ferrite phases contained in the cement are hydrated to provide a green element and the green element is carbonated providing a concrete element binding carbon dioxide.

EP 3 995 470 A1

**(Cont. next page)**

(52) Cooperative Patent Classification (CPC): (Cont.)

C-Sets
**C04B 28/04**

**Description**

The present invention relates to concrete elements from sulfate free cement and a method of manufacturing them as well as a use of the cement for sequestering carbon dioxide.

Cement is a widely used and very versatile building material. However, manufacturing portland cement clinker, the most usual basis for cement, results in considerable carbon dioxide emissions. About 6 to 8 % of the worldwide $CO_2$ emission is attributed to cement. Many proposals exist to reduce these emissions, and a lot of them are already used in practice, some for decades. However, strategies like using supplementary cementitious materials (SCM) to save clinker, use of waste and by-products as raw material, recycling used concrete, and use of waste and by-products as fuel depend on availability of suitable materials in sufficient amounts. This becomes a problem as avoiding carbon dioxide emission and making waste and by-product useful are increasingly accomplished. Available high quality SCM is not enough to make all concrete from composite cements and the clinker needed for composite cement is still associated with relevant carbon dioxide emission.

Alternative cements have been proposed aplenty, but the building industry is of necessity very conservative, hesitating to change processes and materials, since building materials need to last decades and require an official approval. Moreover, many of the proposed alternative cements and binders need high investment into novel plants and substantial development of devices and processes to make relevant amounts available.

Therefore, there still exists a need for cements and concrete elements obtainable with reduced environmental footprint, especially carbon dioxide emission.

Capturing and permanently storing emitted carbon dioxide is also a still an unsolved problem. Here, too, many proposals exist but their use often has one or more of the following drawbacks: implementing needs a complicated process or device, requires high investment, necessitates significant changes to established processes and devices, incurs unacceptably high costs per ton of $CO_2$ captured. So capturing and storing carbon dioxide is another unsolved problem.

In principle, carbonation hardening of cements could deal with both problems. Especially, carbonation hardening of portland cements (OPC) seems desirable, because making OPC does not require changes of the production methods, infrastructure, and logistic chain, when compared to alternative cements. The carbonation hardening of OPC based concretes has not only potential to bind significant amounts of carbon dioxide, but can also improve the properties of the final product. For example, concrete elements can have higher strength and better surface properties compared to elements made by hydration hardening. However, OPC contains significant amounts of calcium aluminate, calcium ferrite and calcium aluminate ferrite phases. These cannot be avoided for production reasons and do not carbonate appreciably, i.e. are inert from the perspective of carbonation hardening, see e.g. Journal of CO2 Utilization 38, 2020 pages 398 - 415. This is the reason why special binders are proposed for carbonation hardening, see e.g. US 8,114,367 B2, US 2006/0185560 A1, US 8,367,025 B2, US 2013/0112115 A1, and EP 2,511,003 A1. As mentioned before, special binders are not desirable so neither special carbonation hardening binders nor carbonation hardening of OPC is a solution to the described problems.

It has now surprisingly been found that concrete elements can be obtained from sulfate free portland cements, when a combined hydration and carbonation hardening is employed.

Thus, the above mentioned objects are achieved by concrete elements obtainable by mixing a portland cement clinker containing cement made without adding sulfate carrier with water to form a wet mixture without adding sulfate, hydration of the wet mixture until at least 5 wt.-% of calcium aluminate, calcium ferrite and calcium aluminate ferrite phases contained in the cement are hydrated to provide a green element, and carbonation hardening of the green element to provide the concrete element, as well as by a method for manufacturing concrete elements comprising: manufacturing a portland cement clinker containing cement without adding sulfate carrier, mixing the cement with water forming a wet mixture without adding sulfate carrier, hydration of the wet mixture until at least 5 wt.-% of calcium aluminate, calcium ferrite and calcium aluminate ferrite phases contained in the cement are hydrated to provide a green element, and carbonation hardening of the green element to provide the concrete element, and a use of portland cement clinker containing cement not containing sulfate carrier for sequestering carbon dioxide wherein the cement is mixed with water to form a wet mixture without adding a sulfate carrier, the wet mixture is hydrated until at least 5 wt.-% of calcium aluminate, calcium ferrite and calcium aluminate ferrite phases contained in the cement are hydrated to provide a green element and the green element is carbonated providing a concrete element binding carbon dioxide.

The present invention uses a characteristic of portland cement and other portland cement clinker containing cements with a lack or absence of sulfate carrier (no added gypsum, anhydrite or hemihydrate) which is generally unwanted, the flash setting. When mixed with water the used cements are setting rapidly, assisted by the rapid hydraulic reaction of the calcium - aluminate - ferrite phases. For concrete elements as aimed at here the open time required for ready mix concrete and cast in place concrete mixed at a construction site is not needed. A sufficient delay of setting to provide the needed processing time can be adjusted with retarder(s). The other consequence of flash setting is a deceleration of hydraulic reaction of the calcium silicate phases resulting in low final compressive strength. This phenomenon is inverted by carbonation hardening, i.e. reaction of phases in the cement and formed during hydration with carbon dioxide to form carbonates, especially calcite, but also other carbonates like vaterite, aragonite, and amorphous calcium carbonate that can be hydrated, as well as hemi/mono-carbonate, carbonated hydrotalcite, magnesium carbonates and Fe-carbonates. Carbonation also accelerates calcium silicate reaction even at normal temperature and pressure as long as significantly more than ambient carbon dioxide concentration is used, e.g. more than 1 Vol.-%, preferably more than 5 Vol.-%, most preferred at least 10 Vol.-%.

The elements, method and use relying on portland cement without addtion of sulfate carrier according to the invention advantageously combine a use of known and established cement manufacturing with sequestration of carbon dioxide. Even further carbon dioxide can be saved in the course of the novel methods and devices for manufacturing portland cement clinker becoming established industry routine. These novel methods and devices for manufacturing portland cement clinker are in particular oxyfuel calcining and/or sintering, and calcining with capturing of the carbon dioxide released from the limestone separately from the fuel exhaust gas from the kiln and/or calcining, e.g. microwave calcining and calcining with indirect heating.

So as to simplify the description the following abbreviations that are usual in the field of cement are used herein: H - $H_2O$, C - CaO, A - $Al_2O_3$, F - $Fe_2O_3$, M - MgO, S - $SiO_2$ and $ - $SO_3$. Compounds are mostly named by the pure form, without explicit mentioning of solid solutions, foreign ion substitution and impurities etc. as are usual in technical and industrial materials. As the man skilled in the art knows, the exact composition of the phases described may vary due to substitution with foreign ions. Such compounds are comprised when mentioning the pure form herein unless it is expressly stated otherwise.

The term "reactive" shall mean a hydraulic reactivity unless specified otherwise. Hydraulic reactivity designates the reaction of a compound with water or other water containing compounds to form hydrated phases including a reaction of two or more compounds occurring simultaneously.

Herein, clinker designates a sinter product obtained by burning a raw material at elevated temperature and containing at least one hydraulic phase. Burning means a change of one or more property of the starting material such as chemistry, crystallinity, phase composition, spatial arrangement and bonds of lattice atoms which is brought about by a supply of thermal energy. The starting material may be a single material, but usually it is a mixture. The starting material is typically finely ground and then designated as raw meal. The starting material may contain mineralizers, which are substances decreasing the temperature necessary for melting and/or act as fluxes and/or enhance clinker formation e.g. by forming solid solutions or stabilisation of phases. Mineralizers can be part of the starting material components or be added as separate component.

Cement is used to designate a material that, after mixing with a liquid to form a paste, is able to develop mechanical strength by hydraulic reaction. Herein, cement denotes a ground clinker, especially a ground portland cement clinker. Binder or binder mixture means a material or mixture containing cement and developing mechanical strength by a hydraulic reaction with water or otherwise like by carbonation, wherein the binder typically but not necessarily contains more components than the cement. A binder is used adding water or another liquid and mostly also aggregate as well as optionally admixtures and/or additives.

A mixture of cement or binder with water which has not, yet, gained appreciable strength is designated cement paste. A mixture from cement, aggregate and water is designated fresh concrete. Herein, the term wet mixture is used to designate a mixture from cement and water until hydration and/or carbonation provide some strength, regardless of which further components are contained. Once the wet mixture developed some strength, the mass is designated green element or green part.

The concrete elements according to the invention, preferably obtained by the method according to the invention, are made from a cement that comprises portland cement clinker but no added sulfate. With technical raw materials it is expected that traces of sulfate, both alkali and alkaline earth metal sulfate, will be present from corresponding components in the raw material. The amount of sulfates in the clinker can be as high as 2 wt.-% (calculated as $SO_3$). Thus, cement without added sulfate carrier - also abbreviated sulfate free cement - does not exclude traces of sulfate being present from the raw materials, but in contrast to OPC containing several wt.-%, typically from 3 to 5 wt.-% added calcium sulfate (C$), no sulfate is added according to the invention. Consequently the used cement contains less than 2 wt.-% sulfate calculated as $SO_3$, preferably up to 1.5 wt.-%, most preferred up to 1 wt.-%.

A use of cements without added sulfate has been proposed previously, e.g. in EP 696 558 A2, EP 1 004 555 A1, EP 1 004 556 A1, EP 1 004 557 A1, EP 1 072 566 A1, and EP 517 869 B1. However, the binders taught in this prior art are intended for hydration hardening, carbon dioxide sequestration or carbonation hardening are not mentioned and would not be expected to occur by one of ordinary skill in the art.

The cement used in the method according to the invention contains ground portland cement clinker obtained in any process known per se, usually in an amount of at least 5 wt.-%, preferably at least 20 wt.-%, most prefrred at least 35 wt.-%, with respect to the total cement weight. Suitable cements are e.g. cements analogous to DIN EN 197-1 without sulfate addition. Preferably, the cement is CEM I without sulfate addition, more preferred a composite cement analogous to CEM II, CEM III, CEM IV, or CEM V without sulfate addition, and also contains an SCM and/or a filler.

Useful SCM are for example but not exclusively ground granulated blast furnace slag, fly ashes both with low or high calcium content, natural pozzolans, and artificial pozzolans like calcined clay. Useful fillers are rock flours, especially ground limestone. Composite cements containing limestone are especially preferred, both such with limestone as minor component < 5 wt.-% of the total cement, and with limestone as one main component, e.g. 6 to 35 wt.-% of the total cement. The fineness according to Blaine typically ranges from 2000 $cm^2/g$ to 10000 $cm^2/g$, preferably from 2500 to 6000 $cm^2/g$, most preferred from 3000 to 5000 $cm^2/g$. Usually the $D_{90}$ is in the range from 10 $\mu m$ to 200 $\mu m$, preferably from 20 $\mu m$ to 100 $\mu m$, especially from 25 $\mu m$ to 80 $\mu m$. The Rosin-Rammler Parameter slope n is preferably in the range from 0.6 to 1.4, especially from 0.7 to 1.25.

As is well known, ground portland cement clinker of common fineness without sulfate addition sets very fast upon addition of water, so-called flash setting. However, there are portland cements comprising from 0.1 to 2 wt.-% sulfate calculated as $SO_3$ from sulfur (compounds) present in the raw materials and/or fuel. Depending on the intended use and the cement fineness, the setting time provided by such sulfate can be adequate. But in most cases a prolonged setting time is desirable. Therefore, the method according to the invention preferably comprises admixing a retarder. The retarder can be added upon mixing with water, i.e. be added to the mixing water or together with the mixing water or directly before adding the mixing water. Dry and wet or semi-dry substances can also be added to the cement during the cement production, i.e. before or after grinding the cement clinker. Adding the wet or semi-dry substances is possible, e.g. during the cement grinding. Several grinding aids are dosed in this way. The water is added to cool down the grinding device. Of course, the amount of water needs to be limited.

Suitable retarders are for example, but not exclusively, phosphates, borates, salts of Pb, Zn, Cu, As, Sb, lignosulphonates, hydroxycarboxylic acid and their salts, phosphonates, sugars (saccharides) and mixtures thereof.

Usually the retarder(s) is (are) used in the amount recommended by the manufacturer, adapted to the specifically desired prolongation of the setting time. Typically, retarders are used in an amount from 0.00 to 3 wt.-% with respect to the cement, preferably 0.01 to 2 wt.-%, most preferred 0.02 to 1 wt.-%. These amounts allow adjustment of the processing time, i.e. delay until setting, to 200 to 300 minutes, preferably 150 to 200 minutes and most preferbaly 60 to 90 minutes.

The cement can also contain other admixtures and/or additives or those can be added during mixing, either before, during or after the water is added or they can be admixed to (some of) the mixing water. Dry admixtures and/or additives can advantageously be added to the cement, such provided in liquid form (e.g. solutions or suspensions) are preferably added together with or to the mixing water or a part of the mixing water. These can be added during the cement prodcution, e.g. before or after grinding.

As a rule, a fresh concrete contains admixtures to optimize the properties of the mixture like hardening time, spread, viscosity and homogeneity as well as to impart desired properties to the final concrete element like strength, flexural modulus, freeze-thaw-resistance and many more. These admixtures are known per se and are used in their usual amounts. At least admixtures like water reducing agents, plasticizers and super plasticizers to adjust consistency while keeping the w/c in the range suitable for providing pores allowing carbonation, preferably self-desiccation, are typically contained. A water content of concrete between 50 and 250 $kg/m^3$, preferred 70 to 200 $kg/m^3$, ideally 110 to 170 $kg/m^3$, has proven well suited. The admixtures can be added in an amount such as but not limited to from 0.001 to 2 wt.-% with respect to the cement, preferably 0.01 to 1 wt.-%, most preferred 0.02 to 0.5 wt.-%. The amount strongly depends on the cement and the admixture type. Useful water reducing agents, plasticizers and super plasticizers are for example, but not exclusively, organic compounds with one or more carboxylate, sulfonate, phosphonate, phosphate or alcohol functional group. Furthermore, in one embodiment it is preferred to use admixtures that improve the concrete durability performance like air entraining or hydrophobic agents.

Special admixtures can be added in order to improve the dissolution of the carbonate ions in the interacting solutions and consequently to accelerate the carbonation process. These can be water soluble amines like alkanolamines, e.g. primary amines like monoethanolamine (MEA) and diglycolamine (DGA), secondary amines like diethanolamine (DEA) and diisopropanolamine (DIPA), and tertiary amines like methyldiethanolamine (MDEA) and triethanolamine (TEA), or mixtures of two or more of them or other substances that can be used for improving $CO_2$ dissolution in the solution. Additionally, enzymes such as carbonic anhydrase (CA) can be used to enhance carbonation efficiency and modify the properties of the reaction products. It is to be noted that these admixtures have not only one action but can exercise a double role. They can modify the hydration process as well as modify the carbonation process. The effect can largely depend on the dosage

It is also possible to add admixtures that modify the morphology of the precipitating calcium carbonate during the hydration - carbonation process. This provides the advantage of building less dense shales of hydrates-carbonates product and enables higher carbonation and hydration degrees. Suitable are for example magnesium salts, poly(acrylic acids), polyacrylamide, poly(vinyl alcohol), polyvinyl sulfonic acids, styrene sulfonate, citric acid and other organic acids, polysaccharides and other substances, e.g. phosphonates, polycarboxylates.

Moreover it is possible to add admixtures that regulate the pH during the hydration - carbonation process in order to enhance the precipitation of the calcium carbonate, these include metal hydroxides and carbonates and similar substances.

Further, additives are often used in concrete like fillers, pigments, polymers, and fibers. Fillers are added to increase strength, including early strength, and raise particle packing density. Typical fillers are limestone and other stone dust, but other material of adequate fineness and durability is also useful. Also micro silica and fumed silica are useful, they are conventionally considered filler although they show a pozzolanic reaction. Pigments and colorants provide desired aesthetics and can also be added to a layer or the surface of a concrete part. Polymers and fibers increase flexural modulus and crack resistance. The amount of additives is very variable and depends on the specific additive. The known amounts are useful.

Typically, aggregate is mixed with the cement to make concrete. Aggregate can be any aggregate known as such. Normally sand and/or gravel of selected particle sizes is/are used. In some embodiments lightweight aggregate is used, typically as part of the aggregate but also as sole aggregate. The aggregates can be partly or solely recycled aggregates.

The wet mixture is produced in proximity of the molds for making the concrete elements, so that the processing time adjusted with the retarder(s) allows casting the concrete. The cast wet mixture can be compacted as known per se.

Typically, the wet mixture has a water:cement weight ratio (w/c) from 0.1 to 1, preferably from 0.15 to 0.7, and most preferred from 0.2 to 0.35, however, the actual w/c strongly depends on the composition as a whole. For example, fillers and fine pozzolans can reduce water demand and since less water generally results in higher strength of the hardened element it is desirable to use a low w/c. On the other hand there are uses demanding a very flowable wet mixture with less stringent requirements regarding strength where a high w/c is useful. In case the cement comprises one or more SCM and/or filler, those are included into the amount of cement for calculating the w/c. The fresh concrete usually also contains aggregate as well as optionally admixtures and/or additives.

More or less immediately after casting a hydraulic reaction of the calcium aluminates, calcium ferrites and calcium aluminate ferrites in the cement begins. Also, some hydraulic reaction of the calcium silicates, especially alite, takes place. This hydration is allowed to proceed until a substantial part of the calcium aluminates, calcium ferrites and calcium aluminate ferrites have reacted, i.e. at least 5 wt.-%, preferably at least 10 wt.-% and most preferred at least 15 wt.-%. This hydration can take 60 to 300 minutes, often 30 to 240 minutes suffice and as a rule 10 to 120 minutes. Hydration starts during mixing and the necessary hydration can already be completed before the wet mixture is cast into molds or in in place. In many cases the required hydration of calcium aluminates, calcium ferrites and calcium aluminate ferrites is reached after casting the wet mixture. Casting covers pouring into molds to make precast elements, casting in place into formwork. Preferably, casting means pouring into molds for making precast elements like pavers, tiles, panels, slabs, columns, walls and floors, drainage, water and sewage pipes, portable buildings, benches and decoration objects. Usually the hydration time is chosen so that the wet mixture gains enough green strength to obtain green parts suitable for handling. Alternatively the concrete technology is made so that the green sample are stable for handling. Typically a strength of 0.5 MPa, preferably of 1 MPa, more preferred of 2 MPa is achieved. Of course, hydration of the part continues as long as water and hydratable phases are present.

Final strength and finished concrete elements are obtained by subjecting the parts to carbon dioxide hardening. For this the parts are preferably demolded, at least the sides of the molds are removed, so that a carbonating atmosphere can access the parts from a maximized surface. Elements with a big upper surface in relation to the volume do not need that, but slabs, pavers, etc. benefit from demolding. Either the molds (with or without removed sides) or the demolded parts are placed into a confined space, in which the carbonating atmosphere is provided. Placing includes continuously passing the elements through an enclosure containing the carbonating atmosphere. For example, the parts can be placed on a transport belt moving through a tunnel to which carbon dioxide is fed, e.g. from the opposite side. Small parts can be placed on racks, preferably made movable by rollers, and the racks moved into a containment. The specific arrangement is not important and will be designed by one of ordinary skill in the art depending on the intended elements, necessary output, available location and budget.

The carbonating atmosphere can be at ambient temperature and pressure, or raised temperature and/or pressure are used. Suitable are e.g. 0 to 80 °C, preferably 15 to 60 °C are used, most preferred 20 to 35 °C, and/or an absolute pressure from 1 to 10 bar, preferably 1 to 5 bar. The carbon dioxide concentration can range from 1 to 100 Vol.-%, preferably from 5 to 99 Vol.-%, most preferred from 10 to 90 Vol.-%. Usually, carbon dioxide will be provided in the form of gas. Unpurified $CO_2$ can be used, in particular waste or by-product gases containing carbon dioxide. Carbon dioxide solutions are impractical for the present invention.

One preferred carbonating atmosphere is provided by exhaust gases from industrial manufacturing plants or waste incineration. Exhaust gas from modified clinker production lines, e.g. oxyfuel kiln lines or indirect calcination of the calcium or magnesium carbonate, or from carbon capture technologies applied or supposed to be applied in the cement industry, such as amine-based $CO_2$ scrubber, membrane-based gas separation, are preferably used to supply $CO_2$ in the method according to the invention.

In one preferred embodiment exhaust gas from a cement plant is used, which has a carbon dioxide concentration in the range from 14 to 33 Vol.-% or more than 70 Vol.-% when calcining and/or sintering take place in the oxyfuel mode. For this embodiment it is beneficial to have the concrete element manufacturing located near the cement plant, so that its exhaust gas can be directly fed to the hydrated parts in their molds or (partly) demolded parts placed in the confined space.

In another preferred embodiment exhaust gas from a CaO and MgO production plant is used, which has a carbon dioxide concentration in the range from 25 to 75 Vol.-%. For this embodiment it is beneficial to have the concrete element manufacturing located near the cement plant, so that its exhaust gas can be directly fed to the hydrated parts in their molds or (partly) demolded parts placed in the confined space.

In still another preferred embodiment exhaust gas from a coal fired power plant is used, which has a carbon dioxide concentration in the range from 5 to 25 Vol.-%. For this embodiment it is beneficial to have the concrete element manufacturing located near the cement plant, so that its exhaust gas can be directly fed to the hydrated parts in their molds or (partly) demolded parts placed in the confined space.

Another preferred embodiment concerns exhaust gas from an industrial installation, which has a carbon dioxide concentration in the range from 5 to 70 Vol.-%. For this embodiment it is beneficial to have the concrete element manufacturing located near the cement plant, so that its exhaust gas can be directly fed to the hydrated parts in their molds or (partly) demolded parts placed in the confined space.

Yet another preferred embodiment is using the exhaust gas from an industrial installation, for example, but not limited to integrated cement plants and coal fired power plants, is captured and concentrated. This allows the transport of the gas to the precast concrete plant. For this embodiment, the concrete element manufacturing plant can be located everywhere. The exhaust gas can be transported and treated in the concrete element manufacturing to be directly fed to the hydrated parts in their molds or (partly) demolded parts placed in the confined space.

Carbonation time needed for hardening depends on the conditions in the carbonating atmosphere and the thickness of the parts. It typically takes from 1 h to 100 h, often from 2 h to 50 h, and preferably from 3 h to 24 h. If needed, the time for specific parts and conditions can be determined in an orienting experiment. Generally, the water remaining in the green parts suffices to provide sufficient humidity and the pore solution needed for carbonation. The relative humidity (RH) should range from 10 to 100 %, preferably from 30 to 90 % and most preferred from 50 to 70 %. If the water present does not suffice the carbonating atmosphere can be enriched in water, e.g. by bubbling the carbon dioxide containing gas through water.

It is also possible - and might be preferred for parts subjected to carbonation in their molds - to carry out carbonation in two steps, wherein after a first carbonation time the elements are placed into a second carbonating atmosphere to complete carbonation. In this embodiment the second carbonating atmosphere can be either more or less concentrated in carbon dioxide. The carbonating atmosphere in the second carbonation step can derive from different sources or the same source as the carbonating atmosphere in the first carbonation step. Preferably the atmosphere vented from one step is used for the other step.

One advantageous variant moves parts having been carbonated after demolding into a containment with less $CO_2$ (e.g. the gas coming from the first carbonation) to more fully sequester carbon dioxide and increase strength a bit more. For example, parts having been carbonated moving through a tunnel can be stored in a confinement with the gas exiting the tunnel being fed into the confinement to increase sequestration.

Another advantageous variant demolds elements having first been carbonated in their mold (with or without removed sides) and subjects them to a carbonating atmosphere higher concentrated in carbon dioxide. For example, parts having been carbonated moving through a tunnel are placed into a confinement with the exhaust gas before it enters the tunnel, to complete carbonation.

Carbonation usually transforms at least 40 wt.-% of the carbonatable phases present into calcium carbonates, preferably at least 50 wt.-%, most preferred at least 60 wt.-%. While up to 100 wt.-% can be transformed, this would in most cases take too long so that typically up to 95 wt.-%, preferably up to 99 wt.-% are transformed. Carbonatable phases are mainly calcium silicates (alite, belite and other natural and synthetic calcium silicates), calcium oxide, magnesium oxide, calcium hydroxide, calcium silicate hydrates, calcium aluminate hydrates, calcium ferrite hydrates and calcium aluminate ferrite hydrates, calcium magnesium oxides, wollastonite, pseudo wollastonite, rankinite, and others. Some of these phases are present from the beginning, if they are contained, others form during hydration and some can be both present in the cement originally and form during hydration. Of these, the phases calcium hydroxide, calcium silicate hydrates, calcium aluminate hydrates, calcium ferrite hydrates and calcium aluminate ferrite hydrates are forned during hydration and can be easily carbonated. The calcium silicates are the main cement clinker phases, typically present in Portland cement clinker in amounts of at least two-thirds by mass with a total content between 50 and 80 wt.-%. The free lime content should not exceed 10 wt.-%, the magnesium oxide content (MgO) should not exceed 5.0 wt.-% in standard Portland cement clinker. According to the invention the latter limits are not necessary, since both CaO and MgO are readily carbonated and their possible negative effects avoided. The other phases are typical minor phases in Portland cement clinker. Again, while substantial amounts thereof have to be avoided according to standard, they can be present in higher amounts according to the invention. Generally, up to 20 wt.-% each and up to 50 wt.-% in total are contemplated to be possible, even beneficial.

Typically, the finished concrete elements have amounts of carbonates, especially calcites from carbonation (i.e. ignoring any carbonate filler) ranging from 5 to 100 wt.-%, preferably from 20 to 80 wt.-%, most preferred from 40 to 60 wt.-% of the initial clinker content of the cement.

The amount of transformed carbonatable phases and calcium carbonate content can be determined e.g. by differential thermal analysis. For this, a sample from the hardened part is ground and placed into the device. The amount of $CO_2$ bound or calcium carbonate is deduced from the mass loss in the respective temperature range. The amount of the CaO bound in the calcium carbonate is compared with the amount of CaO in the strating material to asses the reaction of carbonatable phases using e.g. Steinour's formula

$$CO_2 \text{ total} = 0.785 \times (CaO - 0.56 \, CaCO_3 - 0.7 \, SO_3) + 1.091 \times (MgO - 0.479 \, MgCO_3)$$

where $CO_2$ total is the maximum theoretically achievable $CO_2$ sequestration related to the dry mass and CaO, $CaCO_3$, $SO_3$, MgO and $MgCO_3$ are weight fractions of the corresponding oxides and phases, see Cho et al., "Carbon Dioxide Capture with accelerated carbonation of industrial combustion waste", Int. J. Chem. Engin. Applic., Vol. 2, No. 1, 2011, pages 60-65.

The concrete elements differ from known precast elements made from OPC in that they contain much less, typically substantially no, sulfates and instead a high amount of carbonates, especially calcites. Strength and other properties can be the same, i.e. they are useful in all instances where known precast elements are used. For example as pavers, tiles, panels, slabs, columns, walls and floors, drainage, water and sewage pipes, portable buildings, benches and decoration objects.

The method has several advantages. It allows the transformation of inert materials in cements into material contributing strength by carbonation. Especially the calcium aluminate hydrates, calcium ferrite hydrates and calcium aluminate ferrite hydrates formed during hydration are readily carbonated to products contributing to the mechanical performance of the concrete elements. Additionally, flash setting, when optimized especially with retarder(s), reduces time needed to gain green strength in the parts from the cast wet mixture. This facilitates plant operation. Further, the method allows fast gain of compressive strength, based on the carbonation of the calcium aluminate hydrates, calcium ferrite hydrates and calcium aluminate ferrite hydrates and calcium silicate hydrates formed during hydration, the full potential of the portland cement clinker is used.

The invention will be illustrated further with reference to the attached figures, without restricting the scope to the specific embodiments described. The invention includes all combinations of described and especially of preferred features that do not exclude each other.

If not otherwise specified any amount in % or parts is by weight and in the case of doubt referring to the total weight of the composition/mixture concerned. A characterization as "approximately", "around" and similar expression in relation to a numerical value means that up to 10 % higher and lower values are included, preferably up to 5 % higher and lower values, and in any case at least up to 1 % higher and lower values, the exact value being the most preferred value or limit. The term "substantially free" means that a particular material is not purposefully added to a composition, and is only present in trace amounts or as an impurity. As used herein, unless indicated otherwise, the term "free from" means that a composition does not comprise a particular material, i.e. the composition comprises 0 weight percent of such material.

In the figures:

Fig. 1 shows a first embodiment of the method according to the invention,
Fig. 2 shows a second embodiment, and
Fig. 3 shows a third embodiment.

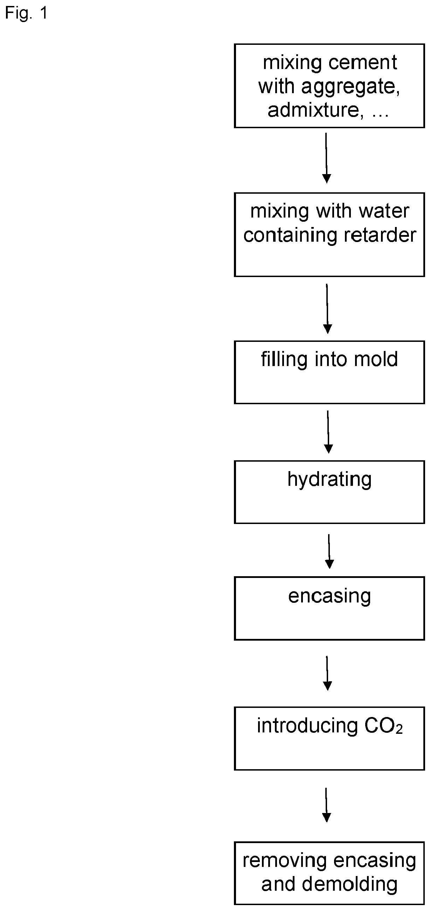

Figure 1 illustrates the production method of a concrete element in the precast concrete plant that is hardened by carbonation. As a first step, the sulfate free cement is mixed with aggregates, admixtures and then with water containing retarder in order to produce a fresh concrete The fresh concrete contains from 100 to 500 kg cement per cubic meter, from 50 to 250 l water per cubic meter, the rest to the cubic meter being aggregates, sand and air voids. The aggregates, sand, cement and water are proportioned by a person skilled in the art to achieve the desired fresh and hardened properties including the air voids content by common concrete technology principles. The mixing is occurring in a suitable concrete mixer. Immediately afterwards the fresh concrete is placed and consolidated/densified in a mold to give it the needed shape. The concrete is cured in the mold for a given time to gain a green compressive strength because of the hydration of calcium aluminates, calcium ferrites and calcium aluminate ferrites, typically for 60 minutes at 25 °C. After that time the green concrete element is transported to the carbonation chamber. The green concrete elements are exposed to the $CO_2$ gas, e.g. containing 50 to 75 % vol. $CO_2$, for 1 to 10 hours at 30 °C. The carbonate activated calcium silicate phases react to form calcium carbonate and gel. This results in a filling of the pores and increases the compressive strength. Furthermore, the AFt and AFm phases generated from the hydration of calcium aluminates, calcium ferrites and calcium aluminate ferrites are carbonated. After the carbonation hardening, the concrete elements are taken from the chamber, demolded and stored in a storage place at 20 °C, RH between 50 and 90 %. During this time, called post curing, the concrete is gaining further strength because of ongoing hydration reactions.

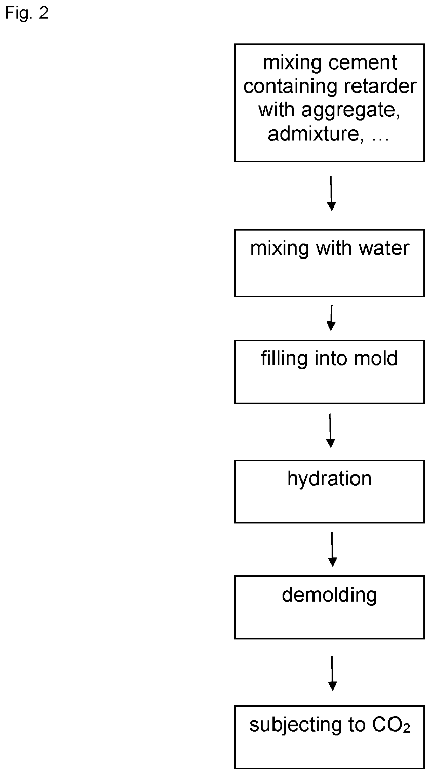

Figure 2 illustrates a variant of the production method of a concrete element in the precast concrete plant. As a first step, the sulfate free cement is mixed with aggregates, admixtures, retarder and water in order to produce a fresh concrete, usual amounts are as described for figure 1. The mixing is occurring in a suitable concrete mixer. Then fresh concrete can be stored in a mixer or in a transport arrangement till it is filled in the forms. Subsequently, the fresh concrete is placed and consolidated/densified in a mold to give it the needed shape. Then concrete is cured in the mold for a given time to gain green compressive strength because of the hydration of calcium aluminates, calcium ferrites and calcium aluminate ferrites, for example for 60 minutes at 25 °C. After that time the green concrete element is demolded and transported to the carbonation chamber. There the green concrete elements are exposed to $CO_2$ gas, for example containing 50 Vol.-% $CO_2$, for 23 hours at 30 °C. The carbonate activated calcium silicate phases react to form calcium carbonate and gel. This results in a filling of the pores and increases the compressive strength. Furthermore, the AFt and AFm phases generated from the hydration of calcium aluminates, calcium ferrites and calcium aluminate ferrites are carbonated. After the carbonation hardening, the concrete elements are taken from the chamber and stored at 20 °C, RH between 50 and 90 %. During this time the concrete is gaining further strength because of ongoing hydration reactions.

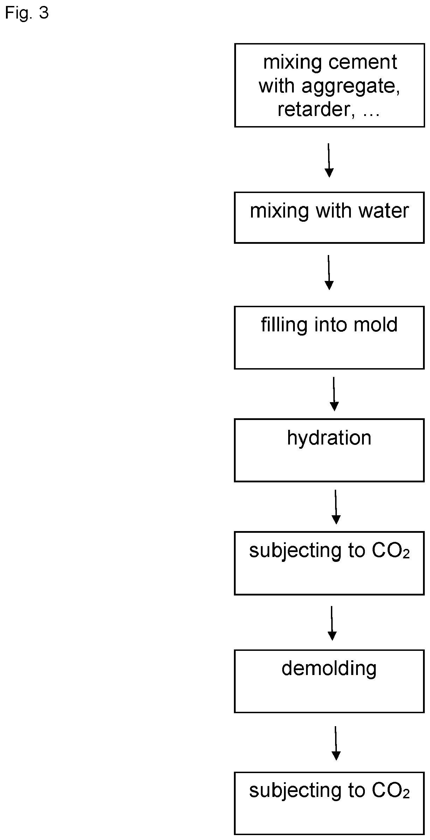

Figure 3 illustrates yet another variant of the production method of a concrete element in the precast concrete plant that is hardened by carbonation. As a first step, the sulfate free cement is mixed with aggregates, admixtures, and water in order to produce a fresh concrete. In this case a cement is used that contains already retarder that was added during the cement production, otherwise the amounts are as described for figure 1. The mixing is occurring in a suitable concrete mixer. The fresh concrete can be stored in a mixer or in a transport arrangement till it is filled in the forms. Subsequently, the fresh concrete is placed and consolidated/densified in a mold to give it the needed shape. The concrete is cured in the mold for a given time to gain a green compressive strength because of the hydration of calcium aluminates, calcium ferrites and calcium aluminate ferrites, mainly, say for 60 minutes at 25 °C. After that time the concrete is transported to the carbonation chamber. Then the green concrete elements are exposed to $CO_2$ gas, e.g. containing 50 Vol.-% $CO_2$, for 23 hours at 30 °C. The carbonate activated calcium silicate phases react to form calcium carbonate and gel. Furthermore, the AFt and AFm phases generated from the hydration of calcium aluminates, calcium ferrites and calcium aluminate ferrites are carbonated This results in a filling of the pores and increases the compressive strength. After the carbonation hardening, the concrete elements are taken from the chamber, demolded and exposed to $CO_2$ gas in a second carbonation chamber, where they are stored at 20 °C, RH between 50 and 90 %. During this time the concrete is gaining further strength because of ongoing hydration reactions and carbonation.

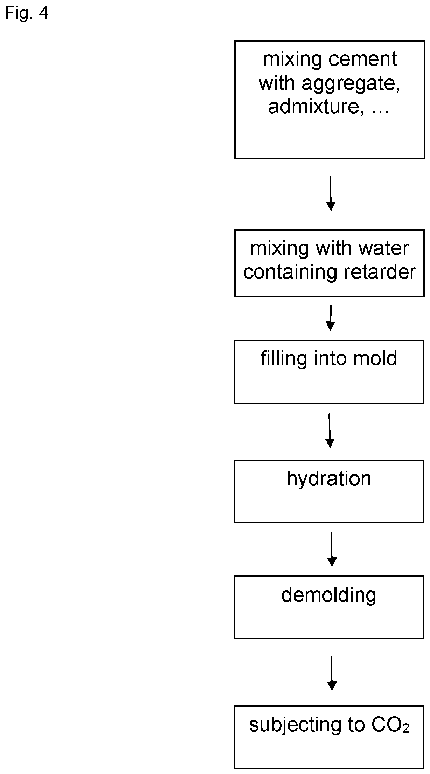

Figure 4 illustrates a further production method of a concrete element in a precast concrete plant that is hardened by carbonation. As a first step, the sulfate free cement is mixed with aggregates, admixtures, and water containing a retarder in order to produce a fresh concrete as described for figure 1. In this case a cement is used that contains already retarder that was added during the cement production. The mixing is occurring in a suitable concrete mixer. The fresh concrete can be stored in a mixer or in a transport arrangement till it is filled in the forms. The fresh concrete mixture is conveyed into a device which dispenses a portion of the mix through a feed drawer into the mold. The concrete in the mold is compressed with the required force and vibrated at a high/required frequency. The resulting concrete elements, e.g. stones, wall blocks, pipes or similar shapes retain their shape when the mold is removed from them. Then concrete is cured in a storage place/curing cabinet a given time to allow calcium aluminates, calcium ferrites and calcium aluminate ferrites react to high extend, mainly, say for 120 minutes at 25 °C. After that time the concrete elements are transport to the carbonation chamber. The green concrete elements are exposed to the $CO_2$ gas containing 50 Vol.-% $CO_2$, for 23 hours at 30 °C. The carbonate activated calcium silicate phases react to form calcium carbonate and gel. Furthermore, the AFt and AFm phases generated from the hydration of calcium aluminates, calcium ferrites and calcium aluminate ferrites are carbonated. This results in a filling of the pores and increases the compressive strength. After the carbonation hardening, the concrete elements are taken off from the chamber and stored in a storage place at 20 °C, RH between 50 and 90 %. During this time the concrete is gaining further strength because of ongoing hydration reactions.

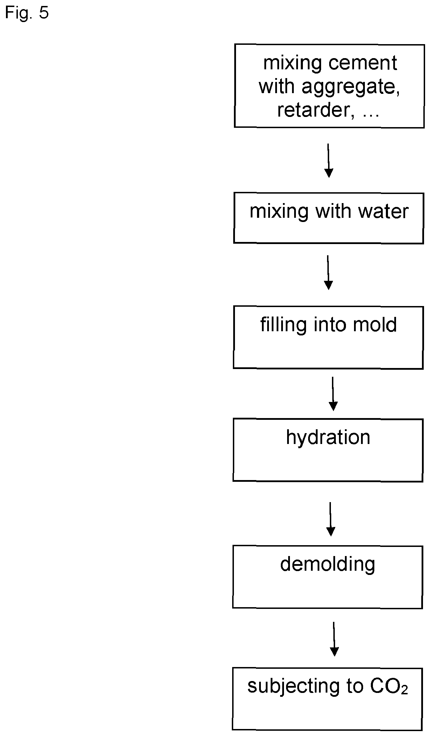

Figure 5 illustrates another embodiment of the production method of a concrete element. As a first step, the sulfate free cement is mixed with aggregates, admixtures, retarder and water in order to produce a fresh concrete. The mixing is occurring in a suitable concrete mixer. The fresh concrete can be stored in a mixer or in a transport arrangement till it is filled in the forms. Subsequently, the fresh concrete is placed and consolidated/densified in a mold to give it the needed shape. The concrete is cured in the mold for a given time to gain a green compressive strength because of the hydration of calcium aluminates, calcium ferrites and calcium aluminate ferrites, mainly, say for 60 minutes at 25 °C. After that time the concrete is demolded and transport to the carbonation chamber. There the green concrete elements are exposed to the $CO_2$ gas containing 50 Vol.-% $CO_2$, for 23 hours at 30 °C. The carbonate activated calcium silicate phases react to form calcium carbonate and gel. This results in a filling of the pores and increases the compressive strength. Furthermore, the AFt and AFm phases generated from the hydration of calcium aluminates, calcium ferrites and calcium aluminate ferrites are carbonated. After the carbonation hardening, the concrete elements are taken from the chamber and stored in a storage place Therein, the concrete elements are saturated with water (continuous or periodic bespattering with water) and then curing it at 20 °C, RH between 75 and 90 %. Alternatively, the concrete elements can be stored in a saturation chamber at RH > 90 %. During this post curing the concrete is gaining further strength because of ongoing hydration reactions

**Claims**

1. Concrete element obtainable from a portland cement clinker containing cement made without adding a sulfate carrier by mixing the cement with water to form a wet mixture without adding sulfate carrier, hydration of the wet mixture until at least 5 wt.-% of calcium aluminate, calcium ferrite and calcium aluminate ferrite phases contained in the cement are hydrated to provide a green element, and carbonation hardening of the green element to provide the concrete element.

2. Concrete element according to claim 1, wherein the composition of the cement corresponds to CEM I, CEM II, CEM III, CEM IV, or CEM V according to DIN EN 197-1, but without sulfate addition, preferably the cement is a composite cement containing one or more supplementary cementitious materials and/or limestone.

3. Concrete element according to claim 1 or 2, wherein the cement contains from 6 to 35 wt.-% limestone with respect to the total cement.

4. Concrete element according to any one of claims 1 to 3, wherein a retarder is admixed to the cement and/or wet mixture, wherein the retarder is preferably selected from phosphates, borates, salts of Pb, Zn, Cu, As, Sb, lignosulphonates, hydroxycarboxylic acid and their salts, phosphonates, sugars (saccharides) and mixtures thereof.

5. Concrete element according to any one of claims 1 to 4, wherein the cement further contains other admixtures than retarders, preferably water reducing agents, plasticizers, super plasticizers, air entraining agents, and/or hydrophobic agents, and/or additives, preferably fillers, pigments, polymers, and/or fibers.

6. Concrete element according to any one of claims 1 to 5, wherein aggregates are contained in the wet mixture.

7. Concrete element according to any one of claims 1 to 6, wherein the wet mixture has a water:cement weight ratio from 0.1 to 1, preferably from 0.15 to 0.7, and most preferred from 0.2 to 0.35, wherein a contained supplementary cementitious material and/or filler is included in the cement weight for calculation.

8. Concrete element according to any one of claims 1 to 7, wherein the amount of carbonates, especially calcites, from carbonation in the concrete element ranges from 5 to 100 wt.-%, preferably from 20 to 80 wt.-%, most preferred from 40 to 60 wt.-% of the initial clinker content of the cement.

9. Method for manufacturing concrete elements comprising:

   - manufacturing a portland cement clinker containing cement without added sulfate carrier,
   - mixing the cement with water forming a wet mixture without adding sulfate carrier,
   - hydration of the wet mixture until at least 5 wt.-% of calcium aluminate, calcium ferrite and calcium aluminate ferrite phases contained in the cement are hydrated to provide a green element, and
   - carbonation hardening of the green element to provide the concrete element.

10. Method according to claim 9, wherein one or more retarder(s) is (are) admixed to the cement and/or wet mixture, preferably in an amount from 0.01 to 3 wt.-% with respect to the cement, preferably 0.02 to 2 wt.-%, most preferred up to 1 wt.-%, allowing adjustment of the processing time, i.e. delay until setting, to from 200 to 300 minutes, preferably to from 150 to 200 minutes, and most preferred to from 60 to 90 minutes.

11. Method according to claim 9 or 10, wherein other admixtures than retarders and/or additives are added during mixing, before, during or after the water is admixed or to at least a part of the mixing water.

12. Method according to any one of claims 9 to 11, wherein hydration proceeds until at least 10 wt.-%, preferably at least 15 wt.-% of the calcium aluminate, calcium ferrite and calcium aluminate ferrite phases are hydrated, typically for 60 to 300 minutes, 30 to 240 minutes, or 10 to 120 minutes and/or until a strength of 0.5 MPa, preferably of 1 MPa, more preferred of 2 MPa is achieved.

13. Method according to any one of claims 9 to 12, wherein the carbon dioxide concentration during carbonation ranges from 1 to 100 Vol.-%, preferably from 5 to 99 Vol.-%, most preferred from 10 to 90 Vol.-% and/or carbonation proceeds for 1 h to 100 h, 2 h to 50 h, or 3 h to 24 h.

14. Method according to any one of claims 9 to 13, wherein the temperature during carbonation ranges from 0 to 80 °C, preferably from 15 to 60 °C, most preferred from 20 to 35 °C, and/or the absolute pressure ranges from 1 to 10 bar, preferably 1 to 5 bar.

15. Method according to any one of claims 9 to 14, wherein the concrete element is a paver, tile, panel, slab, column, wall, floor, drainage pipe, water pipe, sewage pipe, portable building, bench or decoration object.

16. Use of a portland cement clinker containing cement made without a sulfate carrier for sequestering carbon dioxide, wherein the cement is mixed with water to form a wet mixture without adding sulfate carrier, the wet mixture is hydrated until at least 5 wt.-% of calcium aluminate, calcium ferrite and calcium aluminate ferrite phases contained in the cement are hydrated to provide a green element and the green element is carbonated providing a concrete element binding carbon dioxide.

17. Use according to claim 16, wherein one or more retarder(s) is (are) admixed to the cement and/or wet mixture, preferably in an amount ranging from 0.01 to 3 wt.-% with respect to the cement, preferably 0.02 to 2 wt.-%, most preferred up to 1 wt.-%, allowing adjustment of the processing time, i.e. delay until setting, to from 200 to 300 minutes, preferably to from 150 to 200 minutes, and most preferred to from 60 to 90 minutes.

18. Use according to claim 17, wherein the retarder is selected from phosphates, borates, salts of Pb, Zn, Cu, As, Sb, lignosulphonates, hydroxycarboxylic acid and their salts, phosphonates, sugars (saccharides) and mixtures thereof.

Fig. 1

```
┌─────────────────────┐
│   mixing cement     │
│   with aggregate,   │
│    admixture, ...   │
└─────────────────────┘
           │
           ▼
┌─────────────────────┐
│  mixing with water  │
│ containing retarder │
└─────────────────────┘
           │
           ▼
┌─────────────────────┐
│   filling into mold │
└─────────────────────┘
           │
           ▼
┌─────────────────────┐
│      hydrating      │
└─────────────────────┘
           │
           ▼
┌─────────────────────┐
│      encasing       │
└─────────────────────┘
           │
           ▼
┌─────────────────────┐
│  introducing $CO_2$ │
└─────────────────────┘
           │
           ▼
┌─────────────────────┐
│  removing encasing  │
│   and demolding     │
└─────────────────────┘
```

Fig. 2

```
┌─────────────────────────┐
│     mixing cement       │
│  containing retarder    │
│   with aggregate,       │
│    admixture, …         │
└─────────────────────────┘
             │
             ▼
┌─────────────────────────┐
│    mixing with water    │
└─────────────────────────┘
             │
             ▼
┌─────────────────────────┐
│     filling into mold   │
└─────────────────────────┘
             │
             ▼
┌─────────────────────────┐
│       hydration         │
└─────────────────────────┘
             │
             ▼
┌─────────────────────────┐
│       demolding         │
└─────────────────────────┘
             │
             ▼
┌─────────────────────────┐
│   subjecting to CO₂     │
└─────────────────────────┘
```

Fig. 3

```
┌─────────────────────┐
│   mixing cement     │
│  with aggregate,    │
│    retarder, ...    │
└─────────────────────┘
           │
           ▼
┌─────────────────────┐
│  mixing with water  │
└─────────────────────┘
           │
           ▼
┌─────────────────────┐
│   filling into mold │
└─────────────────────┘
           │
           ▼
┌─────────────────────┐
│      hydration      │
└─────────────────────┘
           │
           ▼
┌─────────────────────┐
│  subjecting to CO₂  │
└─────────────────────┘
           │
           ▼
┌─────────────────────┐
│     demolding       │
└─────────────────────┘
           │
           ▼
┌─────────────────────┐
│  subjecting to CO₂  │
└─────────────────────┘
```

Fig. 4

```
┌─────────────────────┐
│   mixing cement     │
│   with aggregate,   │
│   admixture, …      │
└─────────────────────┘
           │
           ▼
┌─────────────────────┐
│  mixing with water  │
│ containing retarder │
└─────────────────────┘
           │
           ▼
┌─────────────────────┐
│   filling into mold │
└─────────────────────┘
           │
           ▼
┌─────────────────────┐
│      hydration      │
└─────────────────────┘
           │
           ▼
┌─────────────────────┐
│      demolding      │
└─────────────────────┘
           │
           ▼
┌─────────────────────┐
│  subjecting to CO₂  │
└─────────────────────┘
```

Fig. 5

```
┌─────────────────────┐
│   mixing cement     │
│   with aggregate,   │
│   retarder, ...     │
└─────────────────────┘
           │
           ▼
┌─────────────────────┐
│  mixing with water  │
└─────────────────────┘
           │
           ▼
┌─────────────────────┐
│   filling into mold │
└─────────────────────┘
           │
           ▼
┌─────────────────────┐
│     hydration       │
└─────────────────────┘
           │
           ▼
┌─────────────────────┐
│     demolding       │
└─────────────────────┘
           │
           ▼
┌─────────────────────┐
│  subjecting to $CO_2$ │
└─────────────────────┘
```

Europäisches
Patentamt

European
Patent Office

Office européen
des brevets

# EUROPEAN SEARCH REPORT

Application Number

EP 20 20 6746

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | AHMAD SHAMSAD ET AL: "Effects of carbonation pressure and duration on strength evolution of concrete subjected to accelerated carbonation curing", CONSTRUCTION AND BUILDING MATERIALS, ELSEVIER, NETHERLANDS, vol. 136, 29 January 2017 (2017-01-29), pages 565-573, XP029925895, ISSN: 0950-0618, DOI: 10.1016/J.CONBUILDMAT.2017.01.069 * Chapters 1 - 4, in particular chapters 2.1, 2.2, 2.4, 2.5; figures 1-12; tables 1-5 * | 1-18 | INV. C04B28/04 |
| X | LI YANG ET AL: "An assessment of microcracks in the interfacial transition zone of recycled concrete aggregates cured by CO2", CONSTRUCTION AND BUILDING MATERIALS, ELSEVIER, NETHERLANDS, vol. 236, 15 November 2019 (2019-11-15), XP086016901, ISSN: 0950-0618, DOI: 10.1016/J.CONBUILDMAT.2019.117543 [retrieved on 2019-11-15] * Chapters 1 - 4, in particular chapters 2.1, 2.2, 2.3.1; figures 1-7; tables 1-7 * | 1,2,5-9, 12-16 | |
| X | GB 1 569 511 A (WESTVACO CORP) 18 June 1980 (1980-06-18) * page 2, line 45 - page 5, line 9; claims 1-15; examples 2,4 * | 1,4,5,7, 8 | TECHNICAL FIELDS SEARCHED (IPC) C04B |
| X | US 5 356 579 A (JENNINGS HAMLIN M [US] ET AL) 18 October 1994 (1994-10-18) * column 3, line 53 - column 12, line 21; claims 1,22; examples 1-3; table 1 * | 1,5-9, 13-16 | |

The present search report has been drawn up for all claims

| Place of search | Date of completion of the search | Examiner |
|---|---|---|
| The Hague | 1 April 2021 | Büscher, Olaf |

EPO FORM 1503 03.82 (P04C01)

## ANNEX TO THE EUROPEAN SEARCH REPORT
## ON EUROPEAN PATENT APPLICATION NO.

EP 20 20 6746

This annex lists the patent family members relating to the patent documents cited in the above-mentioned European search report.
The members are as contained in the European Patent Office EDP file on
The European Patent Office is in no way liable for these particulars which are merely given for the purpose of information.

01-04-2021

| Patent document cited in search report | | Publication date | Patent family member(s) | | Publication date |
|---|---|---|---|---|---|
| GB 1569511 | A | 18-06-1980 | NONE | | |
| US 5356579 | A | 18-10-1994 | US | 5356579 A | 18-10-1994 |
| | | | US | 5635292 A | 03-06-1997 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8114367 B2
- US 20060185560 A1
- US 8367025 B2
- US 20130112115 A1
- EP 2511003 A1
- EP 696558 A2
- EP 1004555 A1
- EP 1004556 A1
- EP 1004557 A1
- EP 1072566 A1
- EP 517869 B1

**Non-patent literature cited in the description**

- *Journal of CO2 Utilization,* 2020, vol. 38, 398-415
- **CHO et al.** Carbon Dioxide Capture with accelerated carbonation of industrial combustion waste. *Int. J. Chem. Engin. Applic.,* 2011, vol. 2 (1), 60-65